(19) Europäisches Patentamt
European Patent Office
Office européen des brevets

(11) **EP 1 319 547 A2**

(12) **EUROPÄISCHE PATENTANMELDUNG**

(43) Veröffentlichungstag:
**18.06.2003 Patentblatt 2003/25**

(51) Int Cl.⁷: **B60K 41/28**, B60K 23/08,
B60T 8/48

(21) Anmeldenummer: **02026644.1**

(22) Anmeldetag: **29.11.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **30.11.2001 DE 10158915**

(71) Anmelder: **AUDI AG**
**85045 Ingolstadt (DE)**

(72) Erfinder: **Reim, Nikolaus**
**85276 Pfaffenhofen (DE)**

(74) Vertreter: **Thielmann, Frank**
**AUDI AG,**
**Patentabteilung I/ES-8**
**85045 Ingolstadt (DE)**

(54) **Elektronische Längs- und/oder Querdifferentialsperre**

(57) Die Erfindung betrifft ein elektronisches Steuerungssystem sowie ein Verfahren zur Beeinflussung des Fahrzustandes eines Kraftfahrzeuges (10) und insbesondere eine elektronische Differentialsperre. Um ein verbessertes elektronisches Steuerungssystem sowie ein verbessertes Verfahren zur Beeinflussung des Fahrzustandes eines Kraftfahrzeuges zur Verfügung zu stellen, sind gemäß der Erfindung bei dem Steuerungssystem eine Vorrichtung zur Erfassung (36) des Wunsch-Fahrzustandes, eine Vorrichtung (42) zur Erfassung des Ist-Fahrzustandes und eine Auswertungsvorrichtung (50) vorgesehen, die aufgrund der Werte der Vorrichtung (36) zur Erfassung des Wunsch-Fahrzustandes und der Werte der Vorrichtung (42) zur Erfassung des Ist-Fahrzustandes unterschiedliche Antriebsmomente der Antriebsmaschine (12) und unterschiedliche Abtriebsmomente der Räder (16, 18, 20, 22) einstellt.

FIG.1

**Beschreibung**

Die Erfindung betrifft ein elektronisches Steuerungssystem sowie ein Verfahren zur Beeinflussung des Fahrzustandes eines Kraftfahrzeuges und insbesondere eine elektronische Längs- und/oder Querdifferentialsperre.

Aus der Praxis sind Differentialsperren bekannt, bei denen über ein selbstsaugendes Hydraulikaggregat ein Bremsdruck aufgebaut wird, wenn an angetriebenen Rädern eine Differenzdrehzahl auftritt. Eine solche Differenzdrehzahl bzw. Schlupf an den angetriebenen Rädern kann sich aufgrund unterschiedlicher Reibwerte und/oder Rad- oder Achslasten ergeben. Der Bremsdruck hat die Folge, daß auf ein Rad mit höherem Reibwert ein dem Bremsmoment entsprechendes höheres Antriebsmoment geleitet werden kann.

Die bekannten Differentialsperren haben jedoch den Nachteil, daß während der Zeitdauer des Bremseingriffes eine veränderte Gaspedalkennung wirksam ist, welche für den Fahrer unangenehm ist, da der Zusammenhang zwischen Gaspedalstellung und Fahrzeugreaktion nicht dem gewohnten Normalzustand entspricht. Die Erklärung dafür liegt darin, daß bei großen Reibwertunterschieden bis zu 50% (bei Ein-Achs-Antrieb) des vom Motor abgegebenen Drehmomentes durch den Bremseingriff verzehrt werden können. Umfangreiche Versuche dazu haben gezeigt, daß ein Großteil der Fahrer in solchen Situationen nicht mit einer entsprechenden Betätigung des Gaspedals reagiert, um das Antriebsmoment auf einem für den Vortrieb notwendigen Wert zu erhöhen.

Aus DE 199 50 205 C2 ist ein elektronisches Steuerungssystem zur variablen Drehmomentverteilung für ein vierradgetriebens Fahrzeug bekannt, durch das ein radselektiver Bremseingriff möglich ist. Bei diesem Steuerungssystem ist vorgesehen, daß zur Änderung des Drehmomentverteilungsverhältnisses zwischen den Rädern der Hinterachse und den Rädern der Vorderachse ein symmetrischer Bremseingriff an den Rädern der Achse vorgenommen wird, deren Drehmomentübertragungsanteil im Verhältnis zu anderen Achsen verkleinert werden soll, wenn kein Radschlupf vorliegt. Um bei einem Bremseingriff eine Reduzierung des Gesamttraktionsmomentes zu verhindern, ist vorgesehen, das Antriebsmoment der Antriebsmaschine automatisch um den Betrag zu erhöhen, der dem Gesamtbremsmoment des Bremseingriffes entspricht.

Der Erfindung liegt die Aufgabe zugrunde, ein verbessertes elektronisches Steuerungssystem sowie ein verbessertes Verfahren zur Beeinflussung des Fahrzustandes eines Kraftfahrzeuges zur Verfügung zu stellen.

Die Lösung dieser Aufgabe erfolgt erfindungsgemäß mit den Merkmalen der Ansprüche 1 bzw. 11.

Gemäß der Erfindung sind bei einem elektronischen Steuerungssystem einer Vorrichtung zur Erfassung des Wunsch-Fahrzustandes, eine Vorrichtung zur Erfassung des Ist-Fahrzustandes und eine Auswertungsvorrichtung vorgesehen, die aufgrund der Werte der Vorrichtung zum Erfassen des Wunsch-Fahrzustandes und der Werte der Vorrichtung zur Erfassung des Ist-Fahrzustandes unterschiedliche Antriebsmomente der Antriebsmaschine und unterschiedliche Abtriebsmomente der Räder einstellt. Die Verbesserung gegenüber dem Stand der Technik wird dabei maßgeblich durch die direkte Erfassung des Ist-Fahrzustandes erreicht, welcher bei Steuerungssystemen gemäß dem Stand der Technik nicht berücksichtigt wird, da bei diesen andere Eingangsgrößen, beispielsweise aufgebrachte Bremsmomente Berücksichtigung finden. Aufgebrachte Bremsmomente und etwaig zeitgleich erhöhte Antriebsmomente haben zwar einen Einfluß auf den Ist-Fahrzustand, dieser ist jedoch durch diese Werte allein nicht vorbestimmt und daher auch nicht erfaßbar. Gemäß der Erfindung wird dagegen der tatsächliche Ist-Fahrzustand erfaßt und es erfolgt ein Eingriff in das Antriebssystem, um den Ist-Fahrzustand so zu verändern, daß dieser dem Wunsch-Fahrzustand entspricht.

Vorzugsweise werden bei einem Eingriff in das Antriebssystem die Abtriebsmomente durch einen Bremseingriff an einem oder mehreren angetriebenen Rädern eingestellt. Für einen solchen Eingriff können bei einem Fahrzeug mit elektronischem Stabilitätsprogramm (ESP) die für ein solches Programm bereits vorhandenen Aggregate verwendet werden, so daß der anlagentechnische Aufwand für ein solchermaßen ausgebildetes Steuerungssystem verhältnismäßig gering ist.

Alternativ oder zusätzlich zu einer Einstellung der Abtriebsmomente durch einen Bremseingriff ist es möglich, eine Kupplung, insbesondere eine drehmomentenverzehrende Kupplung vorzusehen.

Wenn das elektronische Steuerungssystem gemäß der Erfindung einen Bremseingriff oder einen Drehmomentenverzehr veranlaßt, um die Traktion einzustellen, ist gemäß einer bevorzugten Ausführungsform vorgesehen, während der Dauer des Bremseingriffes bzw. des Drehmomentenverzehrs das Antriebsmoment der Antriebsmaschine selbständig zu erhöhen, um den Wunsch-Fahrzustand zu erreichen.

Zur Erhöhung der Fahrsicherheit ist gemäß einer bevorzugten Ausführungsform bei einer Drehmomenten-Anforderungsvorrichtung, die durch eine Software-Routine darstellbar ist, eine Begrenzungsvorrichtung vorgesehen, die ebenfalls als Software-Routine darstellbar ist und eine Erhöhung des Antriebsmomentes der Antriebsmaschinen begrenzt. Dadurch können unsichere Fahrzustände verhindert werden.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:

Fig. 1    einen Pkw mit einem erfindungsgemäßen elektronischen Steuerungssystem in einer schematischen Darstellung,

Fig. 2   ein erstes Flußdiagramm zur Erläuterung der Funktionsweise des erfindungsgemäßen Steuerungssystems und

Fig. 3   ein zweites Flußdiagramm zur Erläuterung der Funktionsweise des erfindungsgemäßen Steuerungssystems, welches ein Detail des ersten Flußdiagramms zeigt,

Fig. 4   ein drittes Flußdiagramm zur Erläuterung der Funktionsweise des erfindungsgemäßen Steuerungssystems, welches ein Detail des ersten Flußdiagramms zeigt, und

Fig. 5   ein Block-Diagramm zur Erläuterung des elektronischen Steuerungssystems.

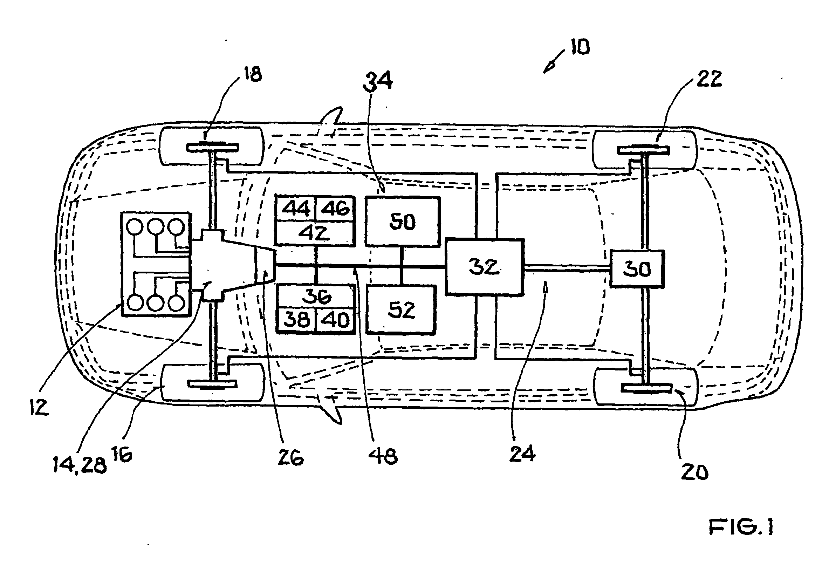

Der in Fig. 1 gezeigte Pkw 10 weist ein Antriebssystem auf, bei dem das von einer Antriebsmaschine 12 gelieferte Antriebsmoment über ein Getriebe 14 sowohl auf die beiden Vorderräder als auch auf die beiden Hinterräder verteilt wird. Dabei weist ein sich an das Getriebe 14 anschließender Antriebsstrang 24 neben einem Längsdifferential 26 und einem vorderen, in das Getriebegehäuse mit eingebauten vorderen Querdifferential 28 ein hinteres Querdifferential 30 auf.

Um an den Rädern 16, 18, 20, 22 ein Bremsmoment aufbringen zu können, ist eine Bremsanlage 32 vorgesehen, welche einen selektiven Bremseingriff an jedem der Räder 16, 18, 20, 22 erlaubt, wobei das Bremsmoment an jedem der Räder 16, 18, 20, 22 individuell vorgebbar ist.

Das erfindungsgemäße Steuerungssystem 34 weist eine Vorrichtung 36 zur Erfassung des Wunsch-Fahrzustandes auf, welche den Fahrzustand gemäß dem Wunsch des Fahrers unter anderem mittels eines Sensors 38 ermittelt, der die Stellung und die Veränderung des Fahrpedals ermittelt. Dieser Sensor 38 ist vorzugsweise der Sensor, der auch von der Motorsteuerung verwendet wird. Ferner weist die Vorrichtung 36 zur Erfassung des Wunsch-Fahrzustandes eine Eingabevorrichtung 40 auf, die es ermöglicht, unterschiedliche Fahrcharakteristiken beispielsweise ruhige Überlandfahrt oder zügige Stadtfahrt einzustellen. Eine solche Eingabevorrichtung 40 ist beispielsweise eine Geschwindigkeitsregelanlage oder ein Fahrprogrammwahlhebel.

Neben der Vorrichtung 36 zur Erfassung des Wunsch-Fahrzustandes ist eine Vorrichtung 42 zur Ermittlung des Ist-Fahrzustandes vorgesehen, die eine Vorrichtung 44 zur Erfassung der Fahrzeuggeschwindigkeit und eine Vorrichtung 46 zur Erfassung der Fahrzeugbeschleunigung aufweist. Die Werte der Vorrichtung 36 zur Erfassung des Wunsch-Fahrzustandes und der Vorrichtung 42 zur Erfassung des Ist-Fahrzustandes werden über einen Datenbus 48 einer Auswertungsvorrichtung 50 zugeführt, welche über den Datenbus 48 sowohl das Bremssystem 32 als auch die Motorsteuerung 52 beeinflußt.

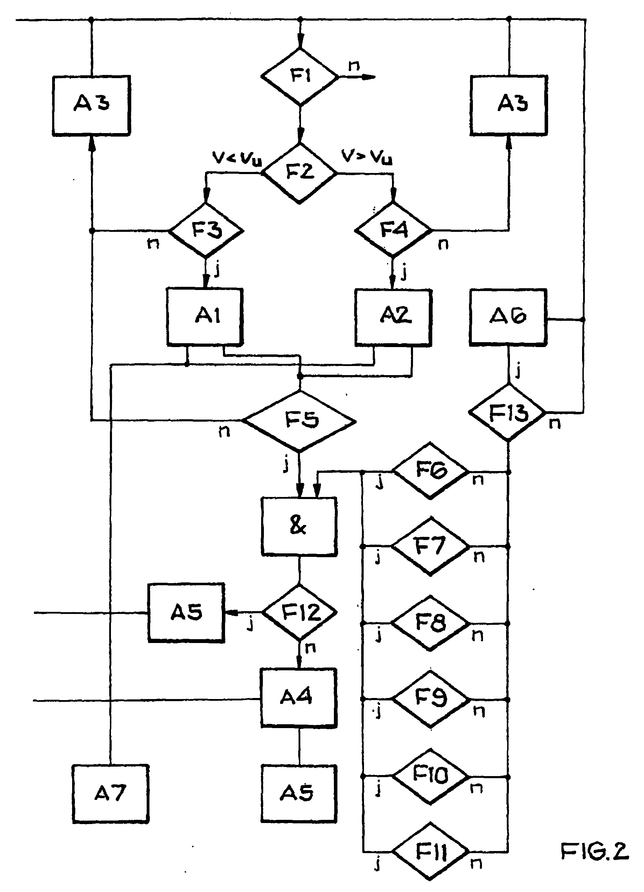

Mit dem in Fig. 2 gezeigten Flußdiagramm werden die Funktion des Steuerungssystems und das erfindungsgemäße Verfahren erläutert. Zunächst wird in der Frage F1 abgefragt, ob die Voraussetzungen für einen Eingriff des Steuerungssystems vorliegen. Dazu wird insbesondere das Verhalten der Räder abgefragt, wobei insbesondere ein Radschlupf oder eine Radbeschleunigung achs- und/oder radweise ermittelt wird. Ist dies nicht der Fall erfolgt der Betrieb des Pkws in konventioneller Art und Weise. Ist das System jedoch eingeschaltet wird in der Frage F2 die aktuelle Fahrzeuggeschwindigkeit v mit einem Schwellenwert verglichen. Ist die Geschwindigkeit v größer als eine vorgegebene Grenzgeschwindigkeit, $v_G$ erfolgt eine Steuerung gemäß dem Pfad "Regeleingriff bei fahrendem Fahrzeug", wohingegen bei einer momentanen Geschwindigkeit v, die kleiner ist als die Grenzgeschwindigkeit $v_G$ ein Regeleingriff gemäß dem Pfad "Regeleingriff bei stehendem Fahrzeug" erfolgt.

Anschließend erfolgt in beiden Zweigen eine Fahrerwunscherkennung, bei der in den Fragen F3 bzw. F4 insbesondere die Fahrpedalstellung ausgewertet und der Wunsch-Fahrzustand ermittelt wird. Stellt das System in der Frage F3 fest, daß der Fahrer anfahren möchte, werden als Aktion A1 folgende Maßnahmen ausgeführt:

Zunächst wird eine Erhöhung des Antriebsmomentes berechnet und als Folge davon eine Bremsmomentenerhöhung an etwaig schlupfbehafteten Rädern bis das Fahrzeug anfährt. Als Eingangswerte werden das verfügbare Antriebsmoment der Antriebsmaschine und ein berechnetes Bremsmoment berücksichtigt. Die maximale Erhöhung ergibt sich durch eine Begrenzungsvorrichtung.

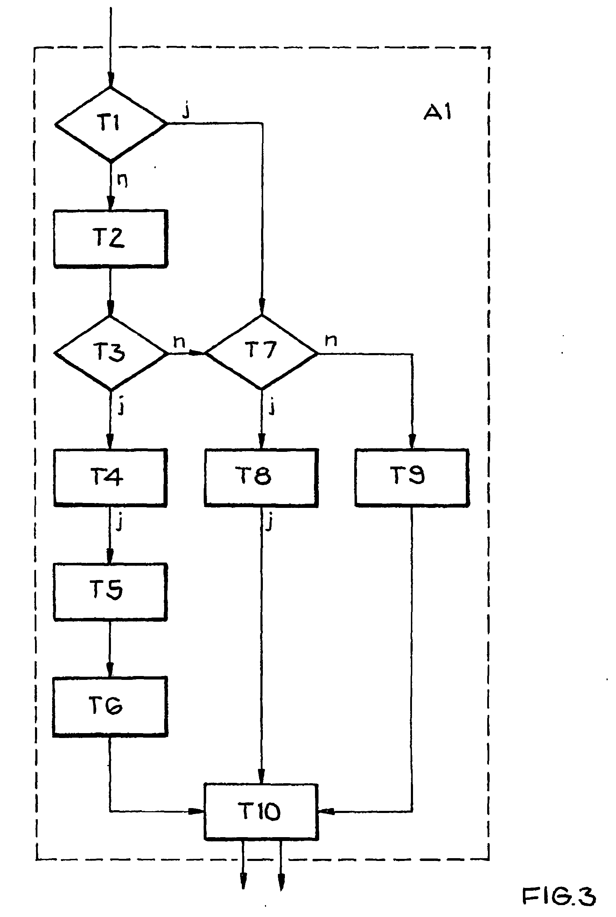

Zur Erläuterung der Aktion A1 ist das Flußdiagramm in Fig. 3 vorgesehen. Darin bedeuten:

T1 : Eine Abfrage, ob die Reibwerte bereits ausgenutzt sind.

T2 : Eine Berechnung des verfügbaren Motormoments:

$$M_v = M_{max} - M_{momentan}.$$

T3 : Eine Abfrage, ob das verfügbare Motormoment $M_v > 0$ ist.

T4 : Eine Berechnung des nächsten Schrittes der Momentenerhöhung y:

$$y = (M_v) / (applizierbarer\ Divisor),$$

wobei der applizierbare Divisor abhängig ist von dem Bremsmoment, dem Fahrzeug (z.B. Masse), Motor, Getriebe und dem Fahrerwunsch. Die Momentenerhöhung y kann auch ein negatives Vorzeichen bekommen, wenn aus dem Fahrerwunsch eine notwendige Reduktion einer bereits bestehenden Erhöhung abgeleitet wurde. Der applizierbare Divisor liegt im Bereich von 1,0 bis 10,0.

T5 : Eine Berechnung der gesamten Erhöhung $y_{ges}$:

$$= y_1 + (-) y_2 + (-)...+ (-) y_n$$

wobei $y_1, y_2.....y_n$ die Momentenerhöhungen früherer Durchläufe der Aktionen des Flußdiagramms in Fig. 2 bedeuten.

T6 : Eine Abfrage ob $y_{ges} < y_{zulässig}$. Wenn ein voreingestellter Grenzwert $y_{zulässig}$ bereits erreicht ist, wird $y_{ges} = y_{zulässig}$ gesetzt.

T7 : Eine Abfrage, ob eine Erhöhung bereits aktiv war.

T8 :Erhöhung neu = Erhöhung alt (d.h. in diesem Zyklus erfolgt keine zusätzliche Erhöhung); es ist auch eine Reduktion einer bestehenden Erhöhung möglich, wenn diese aus dem Fahrerwunsch abgeleitet wurde.

T9 : Keine Erhöhung.

T10: Eine Anpassung der Bremsmomente und eine Ausgabe der Motor- und Bremsmomente.

In entsprechender Weise wird nach der Frage F4, die den Fahrerwunsch (Wunsch-Fahrzustand) bei fahrendem Fahrzeug ermittelt, eine Momentenerhöhung in der Aktion A2 berechnet, wenn festgestellt worden ist, daß der Fahrer weiterfahren möchte. In der Aktion A2 erfolgt wiederum eine Berechnung der Erhöhung des Antriebsmomentes und als Folge davon eine Bremsmomentenanpassung. Die dabei betrachteten Größen sind die Fahrzeuggeschwindigkeit und die Fahrzeugbeschleunigung.

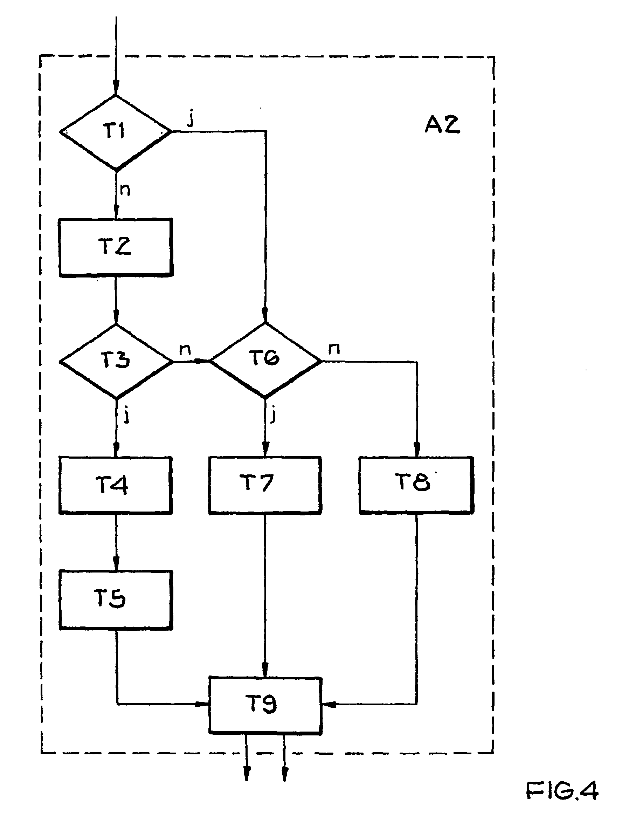

Zur Erläuterung der Aktion A2 ist das Flußdiagramm in Fig. 4 vorgesehen. Darin bedeuten:

T1 : Eine Abfrage, ob die Reibwerte bereits ausgenutzt sind.

T2 : Eine Berechnung des verfügbaren Motormoments:

$$M_v = M_{max} - M_{momentan}.$$

T3 : Eine Abfrage, ob das verfügbare Moment $M_v > 0$ ist.

T4 : Eine Berechnung des nächsten Schrittes der Momentenerhöhung y:

$$y = (M_v) / (applizierbarer Divisor),$$

wobei der applizierbare Divisor eine Funktion der Fahrzeuggeschwindigkeit, Fahrzeugbeschleunigung sowie der Abweichung dieser Größen vom Wunschzustand und dem Bremsmoment ist; y kann auch ein negatives Vorziechen bekommen, falls dies aus dem Fahrerwunsch ableitbar ist. Der applizierbare Divisor liegt im Bereich von 1,0 bis 20,0.

$$y_{ges} = y_1 + (-) y_2 + (-) ...+ (-) y_n,$$

wobei $y_1, y_2.....y_n$ die Momentenerhöhungen früherer Durchläufe der Aktionen des Flußdiagramms in Fig. 2 bedeuten.

T5: Eine Begrenzung Nr. 1 ist die Beschleunigung als Funktion der Fahrzeuggeschwindigkeit; wenn eine Schwelle erreicht ist, dann ist die neue Erhöhung = alte Erhöhung (d.h. in diesem Zyklus keine weitere Erhöhung),
Eine Begrenzung Nr. 2 ist das berechnete Bremsmoment mal einem Faktor z. Da das berechnete Bremsmoment ungenau ist, wird z aus Sicherheitsgründen <1 sein.

T6 : Eine Abfrage, ob eine Erhöhung bereits aktiv war.

T7 : Eine Erhöhung neu = Erhöhung alt; es ist auch eine Reduktion einer bestehenden Erhöhung möglich, wenn diese aus dem Fahrerwunsch abgeleitet wird.

T8 : Keine Erhöhung.

T9 : Eine Anpassung der Bremsmomente und eine Ausgabe der Motor- und Bremsmomente.

Ist die Antwort auf die Frage F3 negativ, das heißt der Fahrer will nicht anfahren, geht die Routine an ihren Ausgangspunkt zurück, wobei in der Aktion A3 ein langsames Ende durchgeführt wird, wenn eine Momentenerhöhung bereits aktiv war. Die gleiche Aktion A3, nämlich ein langsames Ende erfolgt auch, wenn die Antwort auf die Frage F4 "weiterfahren" negativ ist.
Als Ergebnis der Berechnungen in den Aktionen A1 und A2 erfolgt in der Frage F5 eine Überprüfung, ob eine positive Antriebsmomentanforderung vorliegt. Ist dies nicht der Fall erfolgt über die Aktion A3 ein langsames Ende. Wird jedoch eine Antriebsmomenterhöhung angefordert erfolgt eine Überprüfung, ob eine Momentenerhöhung zulässig ist. Dazu werden in der Frage F6 ein ESP-Stabilitätsregler, in der Frage F7 ein Bremslichtschalter, in der Frage F8 erneut die Fahrzeuggeschwindigkeit im Verhältnis zu einem Schwellenwert, in der Frage F9 erneut das Fahrpedal, in der Frage F10 die aktuelle Motorleistung und in der Frage F11 die Systemüberwachung abgefragt. Lassen diese Abfragen eine Momentenerhöhung zu, erfolgt durch Verknüpfung der Ausgangswerte eine Momentenanforderung an die Antriebsmaschine in der Aktion A4, wobei durch die Abfrage F12 eine zeitliche Begrenzung abgefragt wird, bei deren Überschreitung ein langsames Ende der Routine und ein Rückgehen an den Anfang durchgeführt werden. Ist die zeitlich Begrenzung nicht überschritten wird aufgrund der Momentenanforderung in der Aktion A4 das Antriebsmoment in der Aktion A4 erhöht, und das System geht gleichzeitig an den Ausgangspunkt zurück.

Sollten die Fragen F6 bis F11 jedoch eine Antriebsmomentenerhöhung nicht zulassen, wird in der Frage F13 abgefragt, ob die Regelung bereits aktiv ist. Ist dies der Fall, wird über die Aktion A6 ein schneller Abbruch durchgeführt. Ist dies nicht der Fall geht die Routine an ihren Ausgangspunkt ohne schnellen Abbruch zurück.

Wenn in den Aktionen A1 und A2 neben einer Drehmomentenerhöhung der Antriebsmaschine ein Bremseingriff gefordert wird, erfolgt ein solcher radselektiv über die Bremsanlage 32 in der Aktion A7.

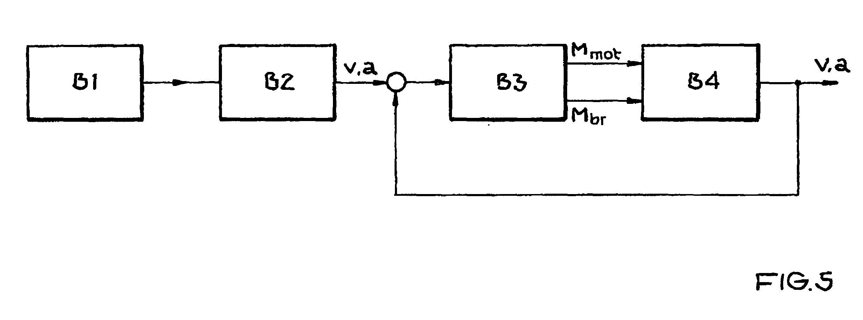

Die Fig. 5 erläutert den mit der erfindungsgemäßen Vorrichtung durchführbaren und gemäß dem erfindungsgemäßen Verfahren vorgesehen Regeleingriff, wobei Block B1 die Fahrpedalbetätigung symbolisiert. Aus dieser Fahrpedalbetätigung wird der Wunsch-Fahrzustand in Block B2 ermittelt, wobei der Wunsch-Fahrzustand durch eine Fahrzeuggeschwindigkeit und eine Fahrzeugbeschleunigung gekennzeichnet ist. In Block B3 erfolgt die Berechnung des Antriebsmomentes und der Momente für den Bremseingriff, die in Block B4 zu einem neuen Ist-Fahrzustand führen. Dieser wird ermittelt und zurückgeführt, woraufhin die Momente in Block B3 solange angepaßt werden, bis der Ist-Fahrzustand dem Wunsch-Fahrzustand entspricht.

**Patentansprüche**

1. Elektronisches Steuerungssystem zur Beeinflussung des Fahrzustandes eines Kraftfahrzeuges (10), bei dem ein von einer Antriebsmaschine (12) bereitgestelltes Antriebsmoment und Abtriebsmomente, die von mindestens zwei Rädern (16, 18, 20, 22) auf einen Untergrund übertragen werden, beeinflußt werden, **gekennzeichnet durch** eine Vorrichtung zur Erfassung (36) des Wunsch-Fahrzustandes, eine Vorrichtung (42) zur Erfassung des Ist-Fahrzustandes und eine Auswertungsvorrichtung (50), die aufgrund der Werte der Vorrichtung (36) zur Erfassung des Wunsch-Fahrzustandes und der Werte der Vorrichtung (42) zur Erfassung des Ist-Fahrzustandes unterschiedliche Antriebsmomente der Antriebsmaschine (12) und unterschiedliche Abtriebsmomente der Räder (16, 18, 20, 22) einstellt.

2. Steuerungssystem nach Anspruch 1, **dadurch gekennzeichnet, daß** die Einstellung der Abtriebsmomente durch einen Bremseingriff an einem oder mehreren angetriebenen Rädern (16, 18, 20, 22) erfolgt.

3. Steuerungssystem nach Anspruch 1 oder 2, **dadurch gekennzeichnet, daß** die Einstellung der Abtriebsmomente über eine Kupplung, insbesondere über eine drehmomentverzehrende Kupplung erfolgt.

4. Steuerungssystem nach Anspruch 2 oder 3, **gekennzeichnet durch** eine Drehmomenten-Anforderungsvorrichtung, die während der Zeitdauer des Bremseingriffes bzw. eines Drehmomentenverzehrs das Antriebsmoment der Antriebsmaschine (12) selbständig erhöht.

5. Steuerungssystem nach Anspruch 4, **dadurch gekennzeichnet daß** die Drehmomenten-Anforderungsvorrichtung eine Begrenzungsvorrichtung aufweist, die eine Erhöhung des Antriebsmomentes der Antriebsmaschine (12) begrenzt.

6. Steuerungssystem nach Anspruch 5, **dadurch gekennzeichnet, daß** die Begrenzungsvorrichtung einstellbar ausgeführt ist, wobei die Erhöhung des Antriebsmomentes aus dem Drehmoment des Bremseingriffes bzw. des Drehmomentenverzehrs mit einem einstellbaren Faktor ermittelt wird.

7. Steuerungssystem nach einem der Ansprüche 1 bis 6, **dadurch gekennzeichnet, daß** das Steuerungssystem als elektronische Längs- und/oder Querdifferentialsperre ausgeführt ist.

8. Steuerungssystem nach einem der Ansprüche 1 bis 7, **dadurch gekennzeichnet, daß** die Vorrichtung (36) zur Erfassung des Wunsch-Fahrzustandes einen Sensor (38) aufweist, welcher die Stellung und/ oder die Veränderung der Stellung des Fahrpedals abfragt.

9. Steuerungssystem nach einem der Ansprüche 1 bis 8, **dadurch gekennzeichnet, daß** die Vorrichtung (36) zur Erfassung des Wunsch-Fahrzustandes eine Eingabevorrichtung (40) abfragt, über die eine wählbare Fahrcharakteristik (ruhige Überlandfahrt, zügige Stadtfahrt) einstellbar ist.

10. Steuerungssystem nach einem der Ansprüche 1 bis 9, **dadurch gekennzeichnet, daß** die Vorrichtung (42) zur Erfassung des Ist-Fahrzustandes eine Vorrichtung (44, 46) zur Erfassung der Fahrzeuggeschwindigkeit und/oder Fahrzeugbeschleunigung aufweist.

11. Verfahren zur Beeinflussung des Fahrzustandes eines Kraftfahrzeuges, bei dem ein von einer Antriebsmaschine bereitgestelltes Antriebsmoment und Abtriebsmomente, die von mindestens zwei Rädern auf einen Untergrund übertragen werden, beeinflußt werden, **dadurch gekennzeichnet, daß** der Wunsch-Fahrzustand erfaßt wird, der Ist-Fahrzustandes erfaßt wird und aufgrund der Werte der Erfassung des Wunsch-Fahrzustandes und der Werte der Erfassung des Ist-Fahrzustandes unterschiedliche Antriebsmomente der Antriebsmaschine und unterschiedliche Abtriebsmomente der Räder eingestellt werden.

FIG. 1

FIG.2

FIG.3

FIG.4

FIG.5